# EUROPEAN PATENT APPLICATION

(11) **EP 1 231 766 A2**
(43) Date of publication of application: **14.08.2002**
(21) Application number: 02075337.2
(22) Date of filing: 28.01.2002
(51) Int. Cl.: H04N 1/00

(54) **Method of integrating imaging products/services with non-imaging products/services in a single kiosk**

(30) Priority: 08.02.2001 US 779335
(71) Applicant: EASTMAN KODAK COMPANY, Rochester, New York 14650 (US)
(72) Inventor: Wasilewski, Jerome J., Rochester, New York 14650-2201 (US); Abens, Daniel J., Rochester, New York 14650-2201 (US)
(74) Representative: Nunney, Ronald Frederick Adolphe

(57) **Abstract**

A method of integrating photographic imaging products and services functionality with non-imaging functionality using the automatic teller machine (ATM) functions for providing financial transactions as the preferred embodiment wherein a single kiosk is disclosed. This invention provides the consumer with the flexibility to generate imaging products and conduct imaging services or perform ATM-related transactions independent of one another; to incorporate images into producing customized financial instruments at the kiosk; to access financial institution services to store or retrieve images as part of providing either imaging products/services or ATM financial instruments; and to utilize the customer's financial accounts and/or financial instruments as a means for payment of imaging products/services rendered at the kiosk. The present invention leverages the infrastructure, equipment and networking capabilities of both sets of functionality to provide an economy of scale and an increased value of differentiation not currently available.

## Description

The invention relates to the field of kiosks, and more particularly, to a combined kiosk for photographic image producing image goods and/or service kiosks and non-imaging products and/or services such as an Automatic Teller Machine (ATM) kiosk.

Image-producing kiosks are well known. An example is the Kodak Picture Maker™. This kiosk is capable of scanning prints to create a digital image file, importing digital image files from various media or from remote storage via a network connection, and creating reprints and enlargements from the scan or digital image file. The kiosk can also add borders and do other manipulations to the image to increase its value. It is known to network image-producing kiosks, capable of sending to and receiving files from a remote location, as well as providing credit card transaction processing.

U.S. Patent No. 5,459,819 is directed to a kiosk focused on the flexibility of generating a combined, composite image from a variety of source images and is limited to image generation; which, in part, provides the input for the image producing products/services functionality of the integrated kiosk.

U.S. Patent Nos. 5,623,581; 5,913,019 are both limited to capturing an image, superimposing it on a selected background and having the composite image printed as a set of stickers; it does not address the flexibility of creating an image from a single or multiple set of image captures and performing edits and enhancements to produce a multiplicity of image products and services.

Automatic Teller Machine (ATM) kiosks are also well known. This kiosk is capable of accessing a customer financial banking account for status, as well as to credit, debit and transfer monetary funds. It is also capable to accept a physical monetary deposit and/or withdrawal, along with disbursement of funds. They are typically networked through the financial institution infrastructure. They may also have a security monitoring camera device. ATMs today are limited to disbursement of bank notes/cash or goods, as from a vending machine. They do not address the generation of personal bank products using imaging (either in the process or integral to the bank product), nor does it address the creation of imaging goods and providing of imaging services as part of its disbursement process.

U.S. Patent No. 5,764,789 discloses the use of biometrics as part of the personal authentication process for customers to access their financial account. It does not address its use as a digital watermark to secure a transaction nor its incorporation into a kiosk product.

U. S. Patent Nos. 5,859,920; 5,905,819; 6,044,182; 6,136,752 disclose the method of embedding digital information in an image and of providing image authentication; it does not address the flexibility and enhancement in the use of watermarked images into non-imaging applications or its incorporation into a kiosk product/service.

U.S. Patent No. 5,774,663 discloses the communications between a customer and a specific financial institution. This patent does not address employing a third party in the financial transaction process.

Internet kiosks are also known. Through browser technology and Internet access, one can search the World Wide Web (WWW) to gain access to a number of web sites. U.S. Patent No. 5,761,071 discloses the use of browser technology as the kiosk graphical user interface interaction with the user for a standalone, Internet-accessible kiosk; however, it does not address the image and non-imaging functionality within the integrated kiosk for providing products and services associated with that functionality. These web sites can only offer a wide variety of imaging and non-imaging (such as banking) products/services that can be fulfilled within their supporting infrastructure and then distributed to the customer either via the Internet or physically shipped.

However, the prior art fails to teach or suggest a method by which the functionality of an imaging producing kiosk is integrated with the functionality of a non-imaging producing kiosk, such as an ATM kiosk, into a single kiosk, that dispenses products and services associated with both types of functionality at the kiosk.

There is a need to provide a kiosk with the ability to import photographic images (i.e.; scanned from film; transferred digitally from a digital still camera, hand-held device or memory device; or downloaded from an Internet-enabled storage location); process digital photographic images (i.e.; remove 'red eye', zoom and crop, add borders and text, etc.); provide print fulfillment services (i.e.; outputting hardcopy print product or digital file at the kiosk, sending e-mail product services, uploading & downloading the digital file to/from an Internet-enabled remote storage location or to remotely print and distribute images); and the ability to conduct a plurality of financial transactions that use imaging as part of its product/service.

A kiosk made in accordance with the present invention leverages the usage of the existing infrastructure, as well as equipment and networking capabilities across functionality types (that is, imaging and non-imaging) verses the placement of two separate, individual kiosks. Cost reduction, through elimination of redundant equipment and more use efficiency of the kiosk is achieved.

The present invention also provides the ability to generate custom financial instruments (e.g.; debit card, credit card, traveler checks) with a specific selected image, for example an image of the recipient, to provide added security against fraudulent transactions. Through image processing techniques, the subject is isolated from the background to provide a distinct image for these financial instruments, as well as for image products. Enhanced security and authorization is also achieved by applying the image captured with a personal identifier scanning device for comparison to a remote database via the communication network. Also, utilizing the network, remote financial transactions using personal identification information can be rendered locally at the integrated kiosk.

Recognizing that both secure and non-secure access is required to maintain the integrated kiosk, it is envisioned that a kiosk made in accordance with the present invention will have separate access means to handle each need (e.g.; routine consumer replenishment, printer servicing, cash deposit removal, etc.).

This invention describes the methods for using an individually integrated kiosk that combines the photographic imaging products/services functionality of an imaging kiosk, with the non-imaging products/services functionality of a non-imaging type kiosk, using Automatic Teller Machine (ATM) functionality as the preferred embodiment.

According to one aspect of the present invention, there is provided a consumer kiosk for providing at least one imaging service and at least one non-imaging service, the kiosk comprising:
a customer input device;
a computer device;
a display device; and
an image capture device for capturing an image at the kiosk which is to be utilized by each of the at least two different services.

In accordance with another aspect of the present invention there is provided a customer kiosk for providing financial and imaging goods and/or services, comprising:
a customer input device;
a display device;
a mechanism for receiving and/or providing monetary transfer by the customer; and
a scanning device for scanning of documents provided to the kiosk.

In yet another aspect of the present invention there is provided a system for providing remote financial transactions, comprising:
a customer kiosk for providing financial and imaging goods and/or services, the kiosk having a customer input device; a display device; a mechanism for receiving and/or providing monetary transfer by the customer; and a scanning device for scanning of documents provided to the kiosk; and a communication mechanism for communicating with a computer system at a remote location and providing information to the computer system obtained by the scanning mechanism;
the computer system having a display device for viewing of information provide by the kiosk, a software program for analyzing the information for confirming the information is authentic and authorizing a financial transaction based on the analyzing of the information.

In still another aspect of the present invention there is provided a method for providing financial and imaging goods and/or services from a kiosk having a customer input scanning device and a display device, the method comprising:
providing a financial document to the input scanning device, the financial document being issued to the user and having user identification;
scanning the financial document provided to the kiosk and obtaining the user identification; and
providing confirmation data to the kiosk for verification of the user identification.

In yet another aspect of the present invention there is provided method for conducting a financial transaction by a customer at a remote kiosk, comprising the steps of:
a. obtaining initial information about the customer at the kiosk;
b. obtaining corresponding information about the customer from a remote location;
c. comparing the initial information with the corresponding information for confirming the authenticity of the initial information; and
d. conducting a financial transaction based on the confirmation of the authenticity of the initial information.

In another aspect of the present invention there is provided a computer software product comprising a computer readable storage medium having a computer program which when loaded into a computer in a kiosk having a customer input scanning device and a display device causes the computer to perform the following steps:
a. scanning the financial document provided to the kiosk and obtaining the user identification; and
b. providing confirmation data to the kiosk for verification of the user identification.

In yet another aspect of the present invention there is provided a computer software product comprising a computer readable storage medium having a computer program which when loaded into a computer in a kiosk causes the computer to perform the following steps:
a. obtaining initial information about the customer at the kiosk;
b. obtaining corresponding information about the customer from a remote location;
c. comparing the initial information with the corresponding information for confirming the authenticity of the initial information; and
d. conducting a financial transaction based on the confirmation of the authenticity of the initial information.

These and other aspects, objects, features, and advantages of the present invention will be more clearly understood and appreciated from a review of the following detailed description of the preferred embodiments and appended claims, and by reference to the accompanying drawings.

In the detailed description of the preferred embodiments of the invention presented below, reference is made to the accompanying drawings in which:
Figure 1 illustrates a prior art image-producing kiosk;
Figure 2 illustrates a prior art ATM kiosk, as a non-imaging producing kiosk;
Figure 3 illustrates an integrated kiosk made in accordance with the present invention having the capability to provide both imaging and non-imaging products/services;
Figure 4 set forth a list of common architecture elements of a prior art kiosk of Figure 1 and prior art kiosk of Fig 2;
Figure 5 illustrates a flow chart of method for dispensing imaging products and/or services from an integrated kiosk made in accordance with the present invention;
Figure 6 illustrates a flow chart of methods for dispensing ATM products/services from an integrated kiosk made in accordance with present invention;
Figure 7 illustrated a custom product produced from a kiosk made in accordance with the present invention; and
Figure 8 illustrated a system for utilizing remote services and applications of an integrated kiosk made in accordance with the present invention.

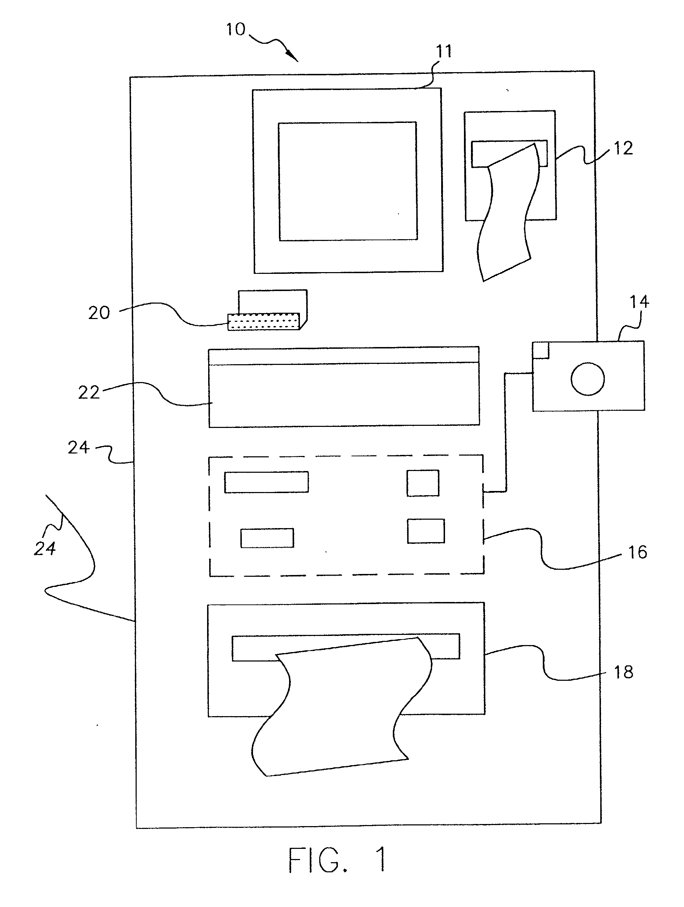

Referring to Figure 1, there is illustrated a prior art kiosk **10** which provides imaging products and services. Kiosk **10** represents a composite of key components for producing imaging products and providing imaging services. The kiosk **10** includes a touch screen user interface **11** which provides user instructions and/or prompts and allows data entry by the user to kiosk **10**. In the embodiment illustrated the screen user interface **11** comprises a touch screen as is well known in the art. The user can scan a photo or other document using the image scanner **22** or, if available, use an attached digital image camera **14** to capture a digital image. A computer **16** is provided in kiosk **10** for controlling operation of the kiosk **10**. The kiosk **10** may also be equipped with peripherals to read digital image files from various sources such memory cards and portable storage devices like CDs, memory sticks, camera memory cards and floppy/zip disks. Through the user interface **11** and application software that resides in the computer **16**, the consumer/customer selects an imaging product or service, and is then instructed to perform the appropriate set of operations. This may include financial transaction payment of the imaging product/service using a multi-card reader **20** for credit card, debit card or smart card processing. A network connection **24** is provided in kiosk **10** that is used to support the transaction processing, as well as provide other appropriate network services and support. Upon approval of payment, image product is generated. For example a small size image printer **12** is provided in kiosk **10** for use in generating photo ID or small sticker sheet output. In addition a larger size image printer **18** may be provided for generating larger image reproduction or large sticker sheet output. Other image product outputs are provided over-the-counter or sent to the consumer.

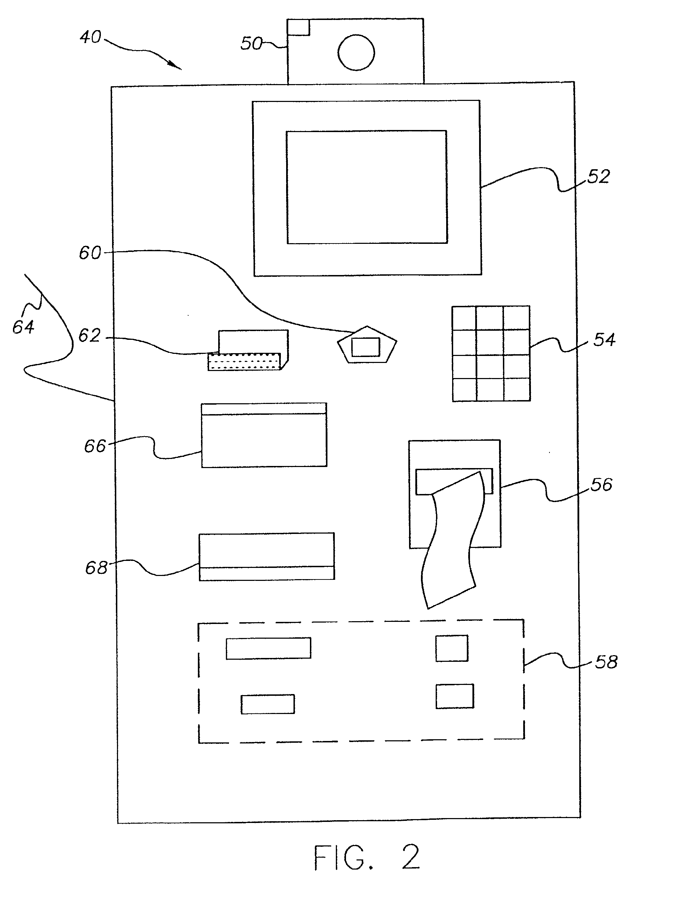

Referring to Figure 2, there is illustrated a typical prior art ATM kiosk **40** used for financial transactions provided by a financial institution. A security camera **50** typically monitors the consumer at the kiosk **40**. Through a user display device **52** provided on kiosk **40**, the consumer is instructed to select the desired transaction and use data entry device **54** for selections and data entry. In the embodiment illustrated display device **52** comprises a CRT and data entry device **54** comprises a key pad. It is to be understood that display device **52** and data entry device **54** may be any well known substitute. Kiosk **40** includes control and application software that resides on an associated computer **58** also provided in kiosk **40**. A network connection **64** is provided in kiosk **40** to support the transaction processing. For any deposits, the consumer uses an envelope deposit slot **66** provided on kiosk **40**. For transactions requiring a credit card, debit card or smart card, the consumer swipes it through the multi-card reader **62** provided on kiosk **40**. When a transaction requires the consumer to provide a written signature or a biometric fingerprint, the writing pad/sensor plate **60** provided on kiosk **40** is used. Any disbursement transaction would be made to the consumer via the financial instrument dispenser **68**. The receipt printer **56** provided on kiosk **40** generates a printout confirmation of the processed transaction.

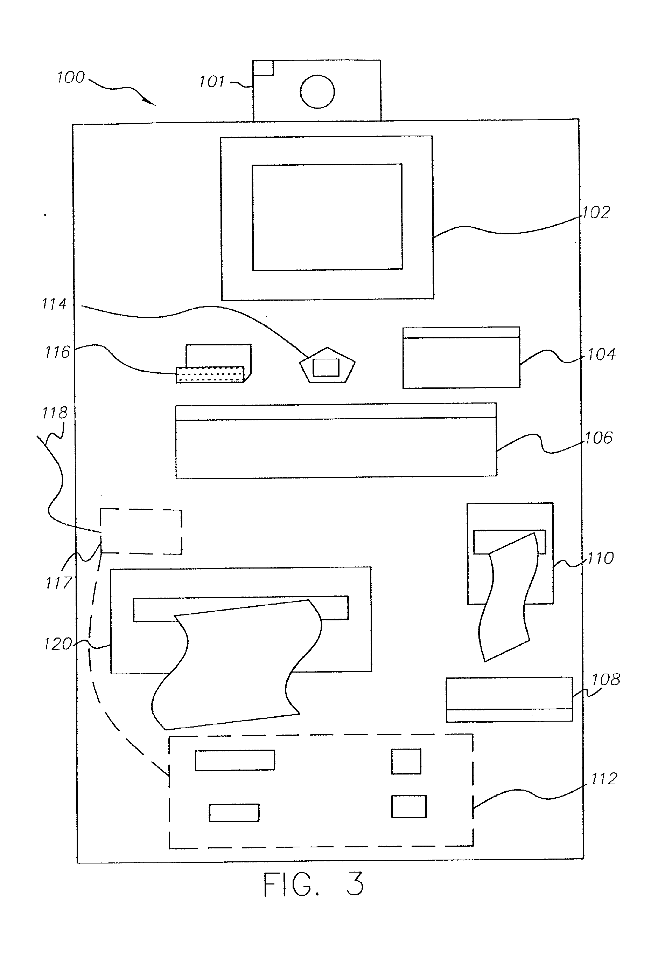

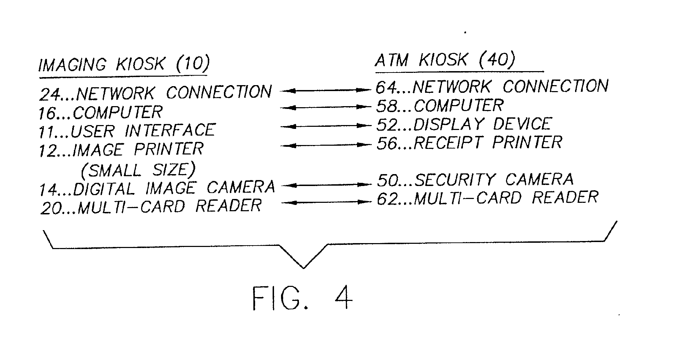

Referring to Figure 3, there is illustrated a kiosk **100** made in accordance with the present invention. The kiosk **100** incorporates the functionality of both an imaging kiosk and an ATM kiosk into a single kiosk unit. Figure 4 set forth a list of common architecture elements of a prior art kiosk of Figure 1 and prior art kiosk of Figure 2. The kiosk **100** includes a customer input device and display device. In the embodiment illustrated, the kiosk **100** uses a touch display screen user interface **102** as a display device to display instructions and prompts, and as an input device to for allowing a customer to enter data for conducting its business. It is of course understood that any appropriate display device and/or data entry device may be employed to support the functions of the kiosk **100**. The kiosk **100** includes an imaging camera **101** provides both security monitoring, personal identification and a means for capturing an image for image-based products. Alternately, the customer can capture a digital image from a photograph using the image scanner **106** provided on kiosk **100** or import a digital image file stored on various media (e.g., CD, memory card/stick or disk) using the various input devices not shown, but provided, on kiosk **100**. These devices are appropriately connected to a computer **112** provided in kiosk **100**. The computer **112** also controls kiosk **100** and uses the appropriate software applications for supporting operations at kiosk **100.** The kiosk **100** also includes a communication device **117** for providing communication over a network connection **118** that supports the transaction processing and other application communication network services and support, such as "back lab processing" for high volume image printing. The network connection **118** may be of a broad bandwidth type or of a low bandwidth type, the broad bandwidth being used for large files, such as image files, and the low bandwidth type being used for transmission of small data files. For example, a phone line may be used for the small data files and a cable type connection could be used for large image type files. Preferably, the kiosk **10**0 would have both types of connections. In addition the kiosk **100** may employ data compression algorithms to support transmission of data.

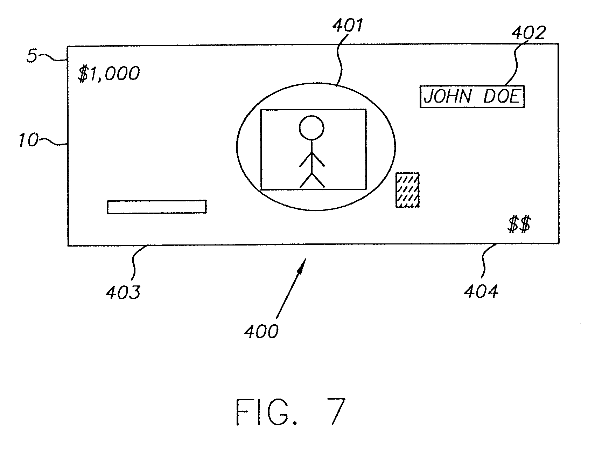

For a financial transaction requiring a monetary deposit, the consumer uses the envelope deposit slot **104**. For imaging or ATM transactions requiring a credit card, debit card or smart card, the consumer swipes it through the multi-card reader **116.** Where a product or service requires the consumer to provide personal identification through a written signature or a biometric fingerprint, a writing pad/sensor plate **114** provided on kiosk **100** is used. The imaging camera **101** would be used for personal identification, providing visualization verification of the customer or other individual at kiosk **100** as well as being the capture device for biometric iris scanning. Upon payment approval, imaging and financial products are generated by kiosk **100**. A small size image printer **110** provided on kiosk **100** is used for small-sized various imaging products. In the embodiment illustrated, printer **110** can be used to produce personalized financial instruments such as traveler checks as illustrated in Figure 7. Kiosk **100** in the preferred embodiment also included a large size image printer **120** for larger-sized imaging products. Financial instrument disbursements, as part of a financial transaction, are made to the consumer using the financial instrument dispenser **108**. A receipt printout, confirming the processed transaction, is generated by smaller size printer **110**

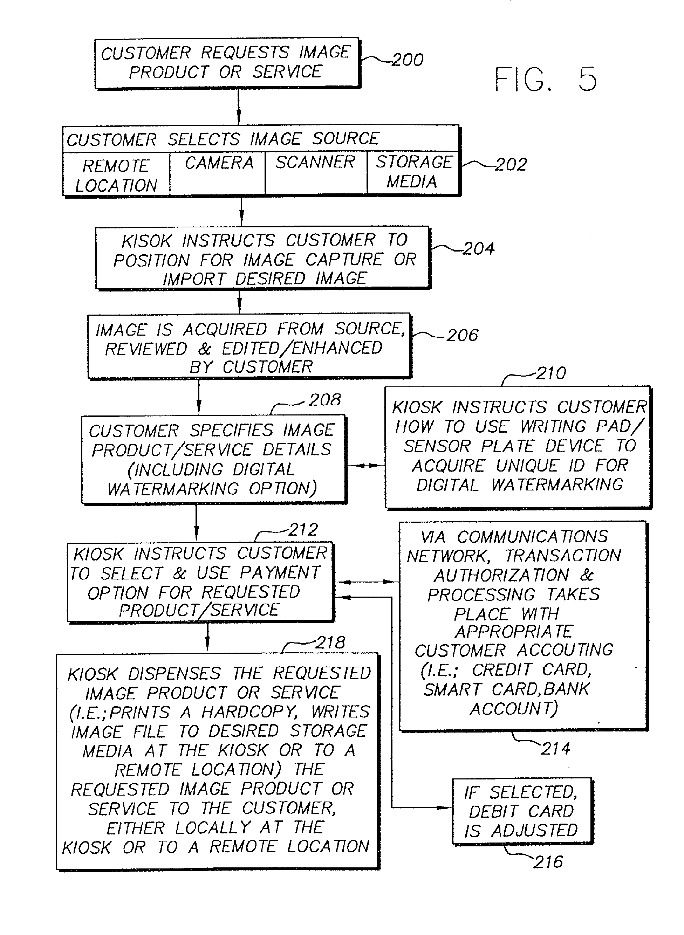

The kiosk **100** may be used for ordering of image products and/or services or as an ATM. Referring to Figure 5 there is shown a flow diagram of one type of operation of the kiosk **100**. When a customer, desires to request an image product and/or service **200,** the customer initiates a request on kiosk **100** and follows the prompts on the touch screen user interface **102**. The customer selects the image source **202** of an image. For example obtain an image from a remote location via the network connection **118**, imaging camera **101**, image scanner **106**, or from a file stored on media such as a CD, memory card/stick, disk using the peripheral options available on the computer **112**, so as to begin the image acquisition process **204**. Once the image is acquired, the customer can perform any image edits or enhancements allowed by kiosk **100** to get the desired image **206** for the image product/service. The customer is also prompted to select the particular image product/service **208.** Prior to rendering the image product/service, the customer is prompted to select desired payment method, for example debit card, credit card, smart card, payment via ATM functionality using uses either the multi-card reader **116** or ATM process **214; 216,** via communication device **117** over the network connection **118.** The multi-card reader **116** has magnetic, optical and computer chip reading capability to perform the transaction for the image product/service. Upon payment approval, the kiosk dispenses the requested image product or service **218**. If selected, digital prints are generated at the large size image printer **120.** Photo ID or Photo Sticker selections are produced at the small size image printer **110.** Other outputs at the kiosk include CD, memory card/stick and disk using the computer **112** peripherals.

Also, as part of the options during the image product/service process, the customer has the ability to embed into the image, personal identification information **210**, as a digital watermark (for example as described in U.S. patents 5,859,920; 5,905,819; 6,044,182; 6,136,752 which are hereby incorporated it their entirety) to uniquely identify the generation of the image product through the user interface **102**, the writing pad/sensor plate **114** or the imaging camera **101**.

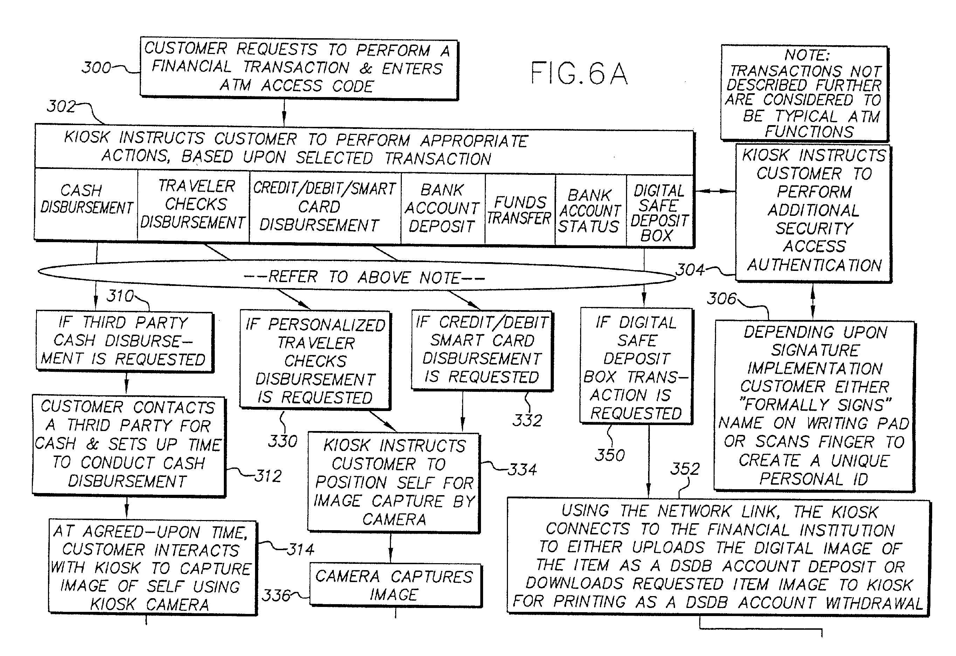

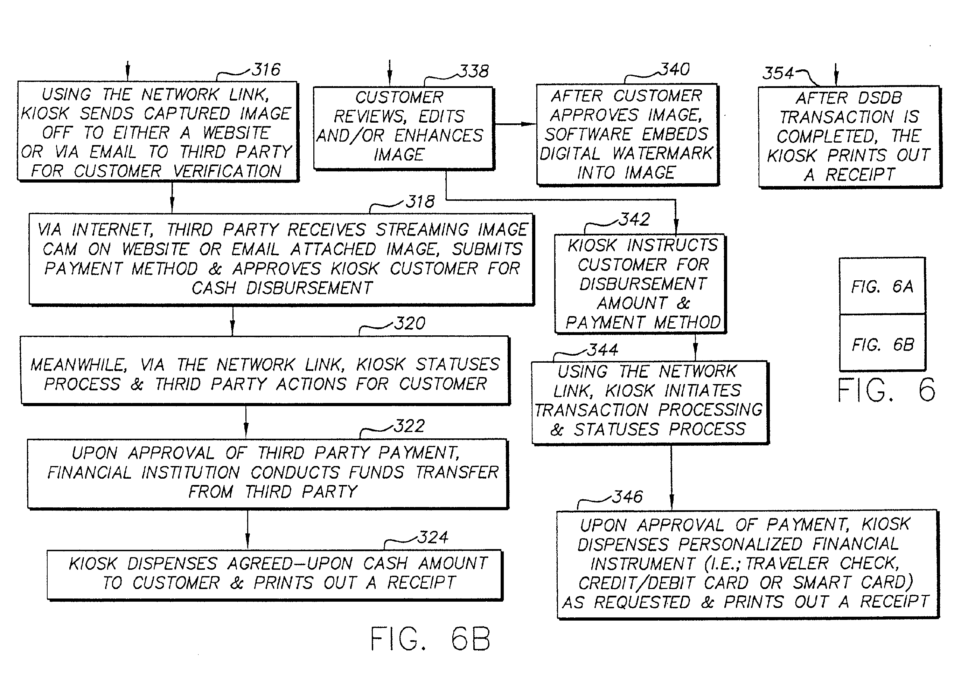

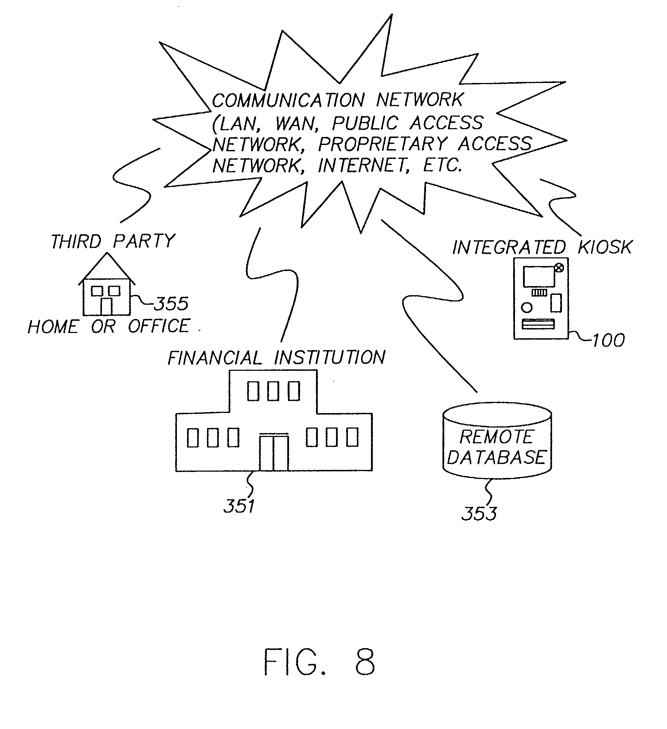

Referring to Figure 6 there is illustrated various other forms of operation of the kiosk **100** in accordance with the present invention. For example, when a customer is interested in conducting a financial transaction **300**, using kiosk **100**, the customer would utilize user interface **102** and its associated screen prompts **302**. In addition (or as an alternative) to using a PIN, an image of the customer is captured by imaging camera **101** and sent to a remote database **353**, financial institution **350** or third party **355** (see Fig. 8) for authorization in conducting some ATM transactions. For example the image of the customer could be sent to the third party responsible for the disbursement for visual verification, or verification by comparing the captured image of the customer using image recognition software to an image on file. Additional security measures can be taken to secure transactions **304**. For example when signature (e.g.; via hand-written or biometrics) is desired, the writing pad/sensor plate **114** (or the imaging camera **101** for an iris scan implementation) is used to authenticate the transaction process **306**. The information obtained by these devices is analyzed and compared with stored information or information accessed over the communication network for verification. This verification may be done at the kiosk **100** or at the remote location. An envelope deposit slot **104** is provided for cash deposit transactions; similarly, card swiping, using the multi-card reader **116**, provides non-cash deposits/withdrawal capability. The customer follows the ATM prompts on the user interface **102**, resulting in the financial transaction, which may include a cash disbursement, at the financial instrument dispenser **108**. After the financial transaction has been completed, the smaller size printer **110** provides a receipt, as a record of the transaction **324; 346; 354**.

In the prior two uses of the kiosk **100**, the transaction and payment are made by the customer at the kiosk **100**. The present invention allows for third party disbursement of funds **310** or payment on behalf of the customer at the kiosk **100.** In one form of operation of the kiosk **100** the customer requesting the funds or services, contacts a third party **355** (see Fig. 8) over a communication network. One such example is over the internet using a telephone connected to the kiosk **100**. Once the third party is connected to the kiosk **100**, appropriate information can be entered by the third party over the communication network. This could be a valid credit card number, bank account etc. This information need not be given to the customer, but instead the information could be entered directly to the kiosk **100** over the communication network. The phone provided at kiosk is used to provide verification that the customer is who the third party **355** wishes to make payment for or authorize the release of funds to. The imaging camera **101** could allow visual verification of the customer at the kiosk **100** when the communication network is the internet and the third party is accessing the kiosk by a computer or other similar device. This allows the third party to view the customer for visual verification. The requested money or payment would then be authorized by the third party.

In another form of operation the third party agrees to a specific time to approve and forward the cash to the requestor **312** kiosk **100** at an agreed-upon time. The requestor (customer) goes to the integrated kiosk **100** and follows the user interface **102** prompts to capture an image of the requestor **314** from the imaging camera **101** and forward it via e-mail **316** over a communications network connection **118**, such as the internet, to the third party at home or at any other location where the third party will be located. Simultaneously, the third party accesses the communication network and opens e-mail to verify that the image is that of the requestor **318**. The e-mail also identifies the secure web site where the third party links to conduct the transaction and approve the cash disbursement. Depending upon the Internet access capability of the third party, the third party could view the requestor for visual verification. Depending on the kiosk network connection **118** and configuration, the third party would alternatively view a live cam broadcast of the requestor on the designated web site. Meanwhile the user interface **102** is statusing the third party activities **320**. Upon approval **322**, the requestor initiates the cash disbursement and the cash is dispensed **324** at the financial instrument dispenser **108**. A receipt is then generated at the smaller sized printer **110**. Also, a receipt via e-mail is sent to the third party to acknowledge that the transaction has been completed. An example of the above could be when a child, the customer, wishes to obtain funds from a parent or other individual from a remote location. The parent would then authorize the issuance of the funds at the kiosk.

In another form of operation of kiosk **100**, the customer can also have access to its own Digital Safe Deposit Box (DSDB) at the financial institution **350**. Following the instructions on the user interface **102**, from the DSDB account the customer can deposit, transfer or withdraw contents **352**. To deposit into the DSDB account, the customer can either use the imaging camera **101** or the image scanner **106** to capture an image, or import a digital file at the computer **112** using the available peripherals or from remote storage using the network connection **118**. To withdraw from the DSDB account, an item image in the DSDB account can be generated at the image printer **120**. A receipt is then generated **354** at the smaller sized printer **110** at the completion of the DSDB transaction.

In another form of operation of kiosk **100**, the kiosk also has the capability to generate personalized financial instruments **330; 332; 400**. As one of the ATM transaction options, a customer can purchase personalized checks, travelers checks, or other financial instruments, through an appropriate financial institution **350** incorporating an image **401** of the bearer and/or the bearer's signature **402** printed on the travelers checks. For example a personal identification icon **404** is printed to provide visual authentication in using the travelers check. Through the user interface **102**, the customer is instructed **334** to either get an image captured **336** via the imaging camera **101** or to scan a photograph on the image scanner **106**. The customer reviews **338** and selects the desired image for the travelers check. For securing the selected financial instrument **330,** the customer optionally uses the writing pad/sensor plate **114** to capture the bearer's signature for printing a signature representation of the bearer. While the customer interfaces with the kiosk to identify the disbursement amount and payment method **342**, the application software within the computer **112**, digitally watermarks **340** the image using the customer's unique information (e.g. customer signature and biometric information). The watermark provides the authentication of financial instrument provided by kiosk **100**. Use of watermarking is well known in its prior art. Through the user interface **102** and network connection **118**, the transaction process is initiated **344** and statused back to the customer. Upon approval of payment **346**, the watermarked image, signature and/or personal identification indicator **404** is printed on the financial instrument. The personal identification indicator **404** provides a visual indication to the bearer and receiver of the financial instrument that it is a registered financial instrument where the image is secured by an embedded digital watermark. The correct number of financial instruments, such as travelers checks, are dispensed into the financial instrument dispenser **108** to equal the amount purchased. When the financial instrument is presented for payment at a desired merchant, the image on the financial can be compared to the presenter and the presenter can be asked to provide a second signature at location **403** for comparison and verification of the signature.

In the above embodiment the financial instrument is obtained at kiosk **100** and presented at desired merchant. It is also contemplated that financial instrument having the image and/or signature of the presenter could be cashed by the kiosk **100**. For example if a financial instrument is made by a first kiosk **100**, or by any other device, at a first location by a customer the financial instrument could be presented to a second kiosk **100** for payment. The customer would follow the instructions and prompts on the user interface **102**. The financial instrument would be inserted into a scanner in kiosk **100** that would obtain the image and signature on the instrument. Then the customer could sign writing pad/sensor pad **114.** The computer could then apply an appropriate algorithm for verification of the signature. In addition, the imaging camera **101** could capture the image of the presenter and the computer would apply an image comparison program for verifying that the image captured by imaging camera **101** is the same as the image on the instrument. Upon approval, the customer would insert the signed financial instrument into the envelope deposit slot **104**, have its value verified and then cash would then be disbursed at the financial instrument dispenser **108**.

While in the preferred invention is directed to the use of the ATM products/services with imaging products/services, the present invention is not so limited. Various other types of non-imaging products/services kiosks would share common features with an imaging kiosk, as an integrated kiosk, may be employed in the present invention.

## Claims

1. A customer kiosk for providing at least one imaging service and at least one non-imaging service, said kiosk comprising:
a customer input device;
a computer device;
a display device; and
an image capture device for capturing an image at said kiosk which is to be utilized by each of the said at least two different services.

2. A customer kiosk according to claim 1 wherein said at least one non-imaging goods and/or service comprise an ATM product and/or service and said at least one image service comprises the providing of image goods and/or services.

3. A customer kiosk according to claim 1 further comprising a communication device for communicating with a remote database.

4. A customer kiosk for providing financial and imaging goods and/or services, comprising:
a customer input device;
a display device;
a mechanism for receiving and/or providing monetary transfer by the customer; and
a scanning device for scanning of documents provided to said kiosk.

5. A customer kiosk according to claim 4 further comprising:
a computer for controlling operation of said kiosk; and
a computer software program which when placed in said computer will allow automatic recognition with regard to pre-identified items on said documents that have been scanned by said scanning device.

6. A system for providing remote financial transactions, comprising:
a customer kiosk for providing financial and imaging goods and/or services, said kiosk having a customer input device; a display device; a mechanism for receiving and/or providing monetary transfer by the customer; and a scanning device for scanning of documents provided to said kiosk; and a communication mechanism for communicating with a computer system at a remote location and providing information to said computer system obtained by said scanning mechanism;
said computer system having a display device for viewing of information provide by said kiosk, a software program for analyzing said information for confirming said information is authentic and authorizing a financial transaction based on said analyzing of said information.

7. A method for providing financial and imaging goods and/or services from a kiosk having a customer input scanning device and a display device, said method comprising:
providing a financial document to said input scanning device, said financial document being issued to the user and having user identification;
scanning said financial document provided to said kiosk and obtaining said user identification; and
providing confirmation data to said kiosk for verification of said user identification.

8. A method for conducting a financial transaction by a customer at a remote kiosk, comprising the steps of:
a. obtaining initial information about said customer at said kiosk;
b. obtaining corresponding information about said customer from a remote location;
c. comparing said initial information with said corresponding information for confirming the authenticity of said initial information; and
d. conducting a financial transaction based on said confirmation of the authenticity of said initial information.

9. A computer software product comprising a computer readable storage medium having a computer program which when loaded into a computer in a kiosk having a customer input scanning device and a display device causes the computer to perform the steps of:
scanning said financial document provided to said kiosk and obtaining said user identification; and
providing confirmation data to said kiosk for verification of said user identification.

10. A computer software product comprising a computer readable storage medium having a computer program which when loaded into a computer in a kiosk causes the computer to perform the steps of:
a. obtaining initial information about said customer at said kiosk;
b. obtaining corresponding information about said customer from a remote location;
c. comparing said initial information with said corresponding information for confirming the authenticity of said initial information; and
d. conducting a financial transaction based on said confirmation of the authenticity of said initial information.
